# EUROPÄISCHE PATENTSCHRIFT

(11) **EP 0 652 044 B1**
(45) Veröffentlichungstag und Bekanntmachung des Hinweises auf die Patenterteilung: **27.01.1999**
(21) Anmeldenummer: 94117014.4
(22) Anmeldetag: 27.10.1994
(51) Int. Cl.: B01D 71/62, C08L 79/04

(54) **Verfahren zum Reinigen organischer Syntheseprodukte**
Process for purifiying organic synthesis compounds
Procédé pour purifier composés de synthèse organiques

(30) Priorität: 09.11.1993 DE 4338196
(43) Veröffentlichungstag der Anmeldung: 10.05.1995
(73) Patentinhaber: BAYER AG, 51368 Leverkusen (DE)
(72) Erfinder: Brandt, Horst, Dr., D-51519 Odenthal (DE); Hildenbrand, Karlheinz, Dr., D-47802 Krefeld (DE); Tegtmeyer, Dietrich, Dr., D-51467 Bergisch Gladbach (DE); Friedrichsen, Ralf, Dipl.-Ing., D-51467 Bergisch Gladbach (DE); Zarges, Wolfgang, Dr., D-51065 Köln (DE)

(56) Entgegenhaltungen:
- EP-A- 0 077 509
- EP-A- 0 287 515
- EP-A- 0 357 021
- EP-A- 0 501 425
- FR-A- 2 276 343
- JP-A- 5 269 944
- DATABASE WPI Week 7951, Derwent Publications Ltd., London, GB; AN 79-91701B & JP-A-54 143 778 (NITTO ELECTRIC IND KK)

## Beschreibung

Die vorliegende Erfindung betritt ein Verfahren zum Reinigen und/oder Aufkonzentrieren von stark sauren Lösungen oder Suspensionen organischer Syntheseprodukte mit einer semipermeablen Membran.

Aus dem Stand der Technik sind bereits eine Vielzahl von Verfahren zur Aufarbeitung von Farbstofflösungen oder Suspensionen mit Hilfe von Membranen bekannt. Bei den dort eingesetzten Lösungen oder Suspensionen handelt es sich um wäßrige, neutrale oder allenfalls schwach saure bis alkalische Lösungen oder Suspensionen. Die verwendeten Membranen bestehen aus Polymeren bzw. Copolymeren in verschiedenen Kombinationen und physikalischen Strukturen als asymmetrische Membranen oder in Compositform, teilweise mit zusätzlich eingeführten ionischen Gruppen auf Trägermaterialien aus Polyester, Polyamid oder Polyolefinen.

Die genannten Verfahren sind aufgrund der verwendeten Membranmaterialien dazu geeignet, wäßrige Lösungen mit pH-Werten von 3 bis 10 aufzuarbeiten.

Aus EP-A-0 287 515 ist bereits ein Verfahren zur Entsalzung und Aufkonzentrierung von Rohfarbstofflösungen mit pH-Werten von 3 bis 10 mittels einer Kombination aus Membranverfahren und cross-flow Mikrofiltration bekannt.

Stark saure Lösungen oder Suspensionen mit pH-Werten <3 können zu Beeinträchtigung der verwendeten Membranmaterialien durch Hydrolyse führen.

Aufgabe der vorliegenden Erfindung war es, ein Verfahren zur Reinigung stark saurer Lösungen oder Suspensionen organischer Syntheseprodukte mit pH-Werten <3 von bei der Synthese entstandenen Nebenprodukten und anorganischen Salzen und/oder Aufkonzentrierung mittels einer semipermeablen Membran bereitzustellen.

Überraschenderweise wurde gefunden, daß mit Hilfe von semipermeablen Membranen aus cyclischen Polyharnstoffen stark saure Lösungen oder Suspensionen mit pH-Werten <3 gereinigt und/oder aufkonzentriert werden können.

Gegenstand der vorliegenden Erfindung ist ein Verfahren zur Reinigung und/oder Aufkonzentrierung von Lösungen oder Suspensionen organischer Syntheseprodukte mit pH-Werten von <3, vorzugsweise <1, von bei der Synthese entstandenen Nebenprodukten und anorganischen Salzen, das dadurch gekennzeichnet ist, daß die Reinigung und/oder Aufkonzentrierung mit Hilfe einer asymmetrischen semipermeablen Membran aus cyclischen Polyharnstoffen mit wiederkehrenden Struktureinheiten der Formel (I) 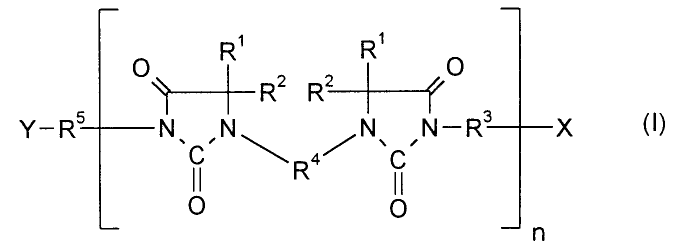 worin
- R¹ und R²: unabhängig voneinander Wasserstoff C₁-C₆-Alkyl, oder zusammen mit dem C-Atom in 5-Stellung einen Cycloalkylrest mit 5 bis 10 C-Atomen bedeuten,
- R³ und R⁴: unabhängig voneinander C₁-C₁₂-Alkylen, C₃-C₆-Cycloalkylen oder Arylen bedeuten, wobei diese Reste noch einmal mit sich selbst oder mit einem anderen aufgeführten Rest über Brückenglieder verbunden sein und Ether, Ester und Säureamidgruppen enthalten können,
- R⁵: eine Bindung oder einen Rest R³ bzw. R⁴ darstellt,
- X und Y: eine Bindung oder unabhängig voneinander die Gruppen 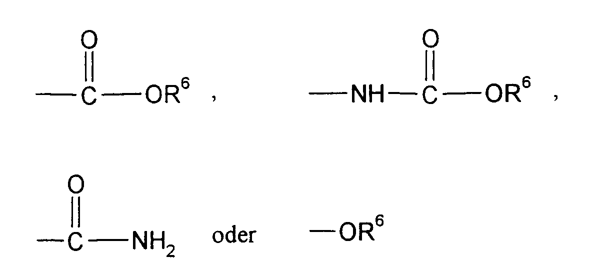 bedeuten,
wobei
- R⁶: für Aryl, C₁-C₁₂-Alkyl, C₁-C₁₂-Hydroxyalkyl oder C₁-C₁₂-Alkoxyalkyl steht und
- n: für 2 bis 200 steht,
durchgeführt wird.

Vorzugsweise handelt es sich um cyclische Polyharnstoffe mit wiederkehrenden Struktureinheiten der Formel (I),
worin
- R¹ und R²: unabhängig voneinander für Wasserstoff oder C₁-C₄-Alkyl stehen,
- R³ und R⁴: unabhängig voneinander für C₁-C₆-Alkylen, C₃-C₆-Cycloalkylen oder Phenylen stehen, wobei diese Reste noch einmal mit sich selbst verbunden sein und Ether, Ester und Säureamidgruppen enthalten können,
- R⁵: für eine Bindung oder einen Rest R³ bzw. R⁴ steht,
- X und Y: unabhängig voneinander für eine Gruppe 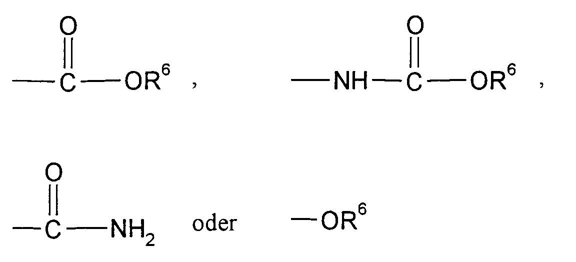 stehen, wobei
- R⁶: fuhr Phenyl, C₁-C₆-Alkyl, C₁-C₆-Hydroxyalkyl oder C₁-C₆-Alkoxyalkyl steht, und
- n: für 50 bis 200 steht.

Semipermeable Membranen aus cyclischen Polyharnstoffen mit wiederkehrenden Struktureinheiten der Formel (I) sind bereits aus DE-A-2 431 071 bekannt und können nach dem dort beschriebenen Verfahren hergestellt werden. Sie werden dort als asymmetrische Membranen in Umkehrosmose-Fahrweise zur Entsalzung stark saurer Lösungen mit pH-Werten zwischen 0 und 4 benutzt.

Bei der Durchführung des erfindungsgemäßen Verfahrens werden die Membranen als Ultrafiltrations- oder Nanofiltrationsmembranen betrieben.

Das erfindungsgemäße Verfahren eignet sich insbesondere zur Reinigung und/oder Aufkonzentrierung von schwefelsauren Lösungen oder Suspensionen organischer Syntheseprodukte mit Schwefelsäurekonzentrationen von 2 bis 30 %, vorzugsweise 10 bis 30 %. Die Temperatur der Lösung oder Suspension kann bis zu 80°C, vorzugsweise 0 bis 60°C, insbesondere 20 bis 40°C, betragen. Besonders vorteilhaft ist die Anwendung des erfindungsgemäßen Verfahrens zur Aufarbeitung schwefelsaurer Lösungen oder Suspensionen von Farbstoffen, wobei insbesondere organische Verunreinigungen wie z.B. nicht umgesetzte Ausgangsverbindungen und anorganische Salze sowie Schwefelsäure abgetrennt werden können. Die Farbstofflösungen oder - Suspensionen können direkt als schwefelsaure Lösungen oder Suspensionen, wie sie bei der Farbstoffsynthese anfallen, mit dem erfindungsgemäßen Verfahren aufgearbeitet werden. Als Farbstoffe sind prinzipiell alle Farbstoffklassen, wie Dispersionsfarbstoffe, Metallkomplexfarbstoffe, Substantivfarbstoffe, Farbstoffe für Wolle, Polyamid und Leder sowie Reaktivfarbstoffe sowie weiterhin alle Arten von optischen Aufhellern geeignet.

Vorzugsweise dient das erfindungsgemäße Verfahren zur Aufarbeitung von Lösungen oder Suspensionen von Reaktivfarbstoffen.

Unter Reaktivfarbstoffen versteht man Farbstoffe, die eine oder mehrere reaktive Gruppen oder abspaltbare Substituenten aufweisen. Welche beim Aufbringen der Farbstoffe auf Cellulosematerialien in Gegenwart säurebindender Mittel und gegebenenfalls unter Einwirkung von Wärme mit den Hydroxylgruppen der Cellulose oder beim Aufbringen auf Superpolyamidfasern, wie Wolle, mit den NH-Gruppen dieser Fasern unter Ausbildung kovalenter Bindungen zu reagieren vermögen.

Im einzelnen sind beispielsweise zu nennen:
2,4-Difluortriazinyl-6-, 2,4-Dichlortriazinyl-6-, Monohalogen-sym.-triazinylreste, insbesondere Monochlor- und Monofluortriazinylreste, die durch Alkyl, Aryl, Amino, Monoalkylamino, Dialkylamino, Aralkylamino, Arylamino, Morpholino, Piperidino, Pyrrolidino, Piperazino, Alkoxy, Aryloxy, Alkylthio, Arylthio substituiert sind, wobei Alkyl vorzugsweise gegebenenfalls substituiertes C₁-C₄-Alkyl, Aralkyl, vorzugsweise gegebenenfalls substituiertes Phenyl-C₁-C₄-alkyl und Aryl vorzugsweise gegebenenfalls substituiertes Phenyl oder Naphthyl bedeutet und wobei bevorzugte Substituenten für Alkyl, Halogen, Hydroxy, Cyan, Vinylsulfonyl, substituiertes Alkylsulfonyl, Dialkylamino, Morpholino, C₁-C₄-Alkoxy, Vinylsulfonyl-C₂-C₄-Alkoxy, substituierte Alkylsulfonyl-C₂-C₄-Alkoxy, Carboxy, Sulfo oder Sulfato sind und für Phenyl und Naphthyl, Sulfo, C₁-C₄-Alkyl, C₁-C₄-Alkoxy, Carboxy, Halogen, Acylamino, Vinylsulfonyl, substituiertes Alkylsulfonyl, Hydroxy, Amino.

Zur Durchführung des erfindungsgemäßen Verfahrens werden die semipermeablen Membranen vorzugsweise in Kombination mit einem mikroporösen Trägermaterial aus Polyphenylensulfid, das als Unterlage für die Polymerschicht dient, eingesetzt.

Die erfindungsgemäß einzusetzenden semipermeablen Membranen auf einem mikroporösen Polyphenylensulfid-Träger sind besonders für den Einsatz als Ultrafiltrationsmembranen geeignet, wobei sie für Molmassen bis 500 g mol⁻¹ einen sehr guten Rückhalt aufweisen und für Anionen und Kationen unterhalb dieser Trenngrenze gut durchlässig sind. Die Membranen auf Polyphenylensulfid-Trägern können als Flach-, Wickel- oder Tubularmembranen ausgebildet sein.

Semipermeable Membranen, bestehend aus einer mikroporösen Trägerschicht aus Polyphenylensulfid und einer asymmetrischen Membranschicht aus cyclischen Polyharnstoffen mit wiederkehrenden Struktureinheiten der Formel 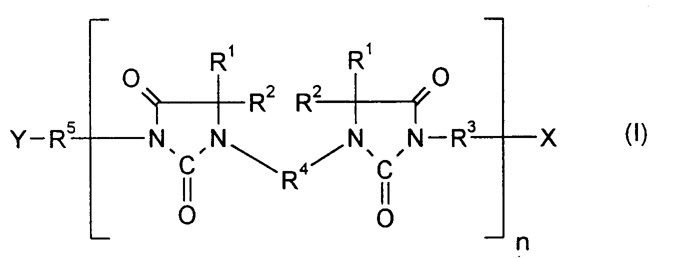 worin
- R¹ und R²: unabhängig voneinander Wasserstoff, C₁-C₆-Alkyl, oder zusammen mit dem C-Atom in 5-Stellung einen Cycloalkylrest mit 5 bis 10 C-Atomen bedeuten,
- R³ und R⁴: unabhängig voneinander C₁-C₁₂-Alkylen, C₃-C₆-Cycloalkylen oder Arylen bedeuten, wobei diese Reste noch einmal mit sich selbst oder mit einem anderen aufgeführten Rest über Brückenglieder verbunden sein und Ether, Ester und Säureamidgruppen enthalten können,
- R⁵: eine Bindung oder einen Rest R³ bzw. R⁴ darstellt,
- X und Y: eine Bindung oder unabhängig voneinander die Gruppen 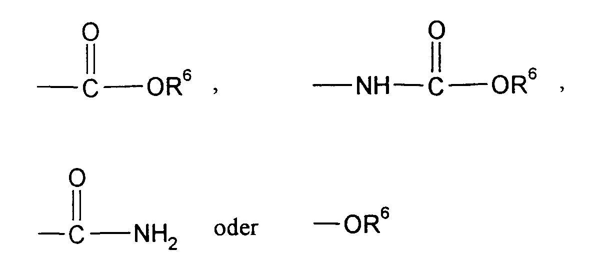 bedeuten,
wobei
- R⁶: für Aryl, C₁-C₁₂-Alkyl, C₁-C₁₂-Hydroxyalkyl oder C₁-C₁₂-Alkoxyalkyl steht und
- n: für 2 bis 200 steht,
sind neu und ebenfalls Gegenstand der vorliegenden Erfindung.

Semipermeable Membranen aus einer mikroporösen Trägerschicht, die aus Polyester, Polypropylen, Polyethylen oder Polyamid bestehen kann und einer asymmetrischen Membranschicht, die u.a. aus einem polycyclischen Harnstoff bestehen kann, sind bereits aus EP-A 0 077 509 bekannt.

Die Herstellung der erfindungsgemäßen Membran erfolgt bekannter Weise (vgl. z.B. DE-A-24 31 071) durch Aufgießen einer Lösung des cyclischen Polyharnstoffs mit wiederkehrenden Struktureinheiten der Formel (I) auf den Polyphenylensulfidträger in Schichtdicken von beispielsweise 100 bis 500 µm.

Die erfindungsgemäßen Membranen eignen sich zur Reinigung und/oder Aufkonzentrierung von Lösungen oder Suspensionen organischer Syntheseprodukte. Die erfindungsgemäßen Membranen eignen sich generell für den Einsatz in einem weiten pH-Bereich von beispielsweise 0 bis 10. Bevorzugt ist jedoch die Verwendung im sauren pH-Bereich von 0 bis 4, bevorzugt <3, besonders bevorzugt von 0 bis 2 und insbesondere <1. Die erfindungsgemäßen Membranen sind für alle Membranprozesse, die bereits oben für das erfindungsgemäße Verfahren genannt wurden, geeignet und können in Form aller üblichen Modularten eingesetzt werden.

Sie sind insbesondere geeignet als Ultrafiltrationsmembranen zur Reinigung und/oder Aufkonzentrierung von schwefelsauren Farbstofflösungen oder -suspensionen mit pH-Werten von <3, vorzugsweise von <1, insbesondere von 0 bis 2, insbesondere zur Abtrennung von Schwefelsäure.

Besonders geeignet sind die erfindungsgemäßen Membranen zur Durchführung des erfindungsgemäßen Verfahrens.

Die erfindungsgemäßen Membranen zeichnen sich neben pH- und Temperaturbeständigkeit durch ein gutes Rückhaltevermögen gegenüber hydrophilen Molekülen in stark sauren oder auch wäßrigen Lösungen mit Molmassen von 400 bis 3 000 Dalton aus. Besonders hervorzuheben sind die erzielten Permeatflußdichten in 1/m²·d von 13 000 - 20 000 1/m²·d bei 5 bar Druck.

Die erfindungsgemäßen Membranen sind z.B. als Flachmembranen, aber besonders als Rohrmembranen, geeignet, aus schwefelsauren Lösungen Moleküle mit Molmassen von 500 Dalton und größer abzutrennen. Der Rückhalt für diese Moleküle ist besser als 99%. Wird das ausgeschleuste H₂SO₄-haltige Permeat durch vollentsalztes Wasser ersetzt, gelingt es nach mehrmaligem Wasseraustausch, den Sulfatgehalt auf <1 % zu senken.

Aber auch gegenüber wäßrigen Lösungen vergleichbarer Molekülgrößen ist der Rückhalt 95 bis 99% mit Permeatstromdichten zwischen 500 und 15 000 1/m²·d.

### Herstellung einer erfindungsgemäßen Membran

### Beispiel A

Ein Polymer mit Struktureinheiten der Formel 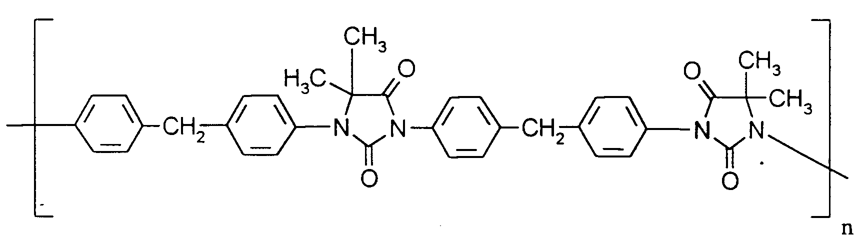 mit n = 20 bis 120
wird in N-Methylpyrrolidon gelöst (22 %ig), filtriert, entgast und in einer Fällungsapparatur auf ein Polyphenylensulfid non wovens aufgebracht. Das beschichtete Vlies wird in ein Wasserbad überführt, das Polymer bei 20°C gefällt und anschließend in 30 %iger wäßriger Glycerinlösung konserviert.

### Anwendungsbeispiele

### Beispiel 1

31 kg Lösung des Reaktivfarbstoffes 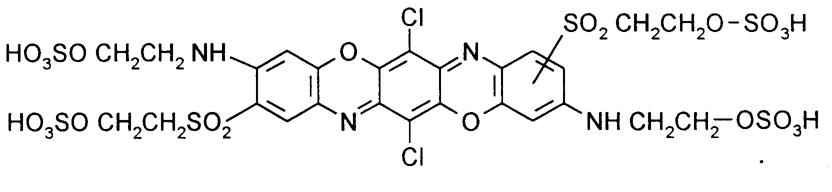 die 15% Schwefelsäure enthält (pH ca. 0 bis 1), wird über eine als Tubularmodul ausgebildete Membran gemäß Beispiel A mit 0,9 m² Austauschfläche bei 30 bar Druck und einer Anströmgeschwindigkeit von 1 200 l/h im Kreislauf gefahren. Der Rückhalt an Farbstoff beträgt 99,6 %, die Permeatstromdichte hat während der 6,5-stündigen Versuchszeit einen Durchschnittswert von 3 900 l/m² · d. Im Permeat werden über die Versuchsdauer gleichbleibend 4,2% SO₄²⁻ ausgeschleust und dem Vorratsbehälter wieder zugeführt

### Beispiel 2

31 kg Farbstofflösung des Reaktivfarbstoffs gemäß Beispiel 1 mit 19 % Schwefelsäure (pH ca. 0) werden bei 30 bar und 1 100 bis 1 300 l/h Anströmungsgeschwindigkeit durch eine als Tubularmodul ausgebildete Membran gemäß Beispiel A mit 0,9 m² Austauschfläche gepumpt.

Das abgezogene Permeat wird durch entsalztes Wasser ersetzt, insgesamt bis zum 3fachen Ausgangsvolumen. Die Permeatstromdichte beträgt 8 000 l/m² · d. Der Farbstoffrückhalt verbessert sich von 98,1% am Anfang auf 99,4% am Ende. Der Sulfatgehalt fällt von anfangs ∼ 19 % auf 3 % ab.

Die verbleibende Säure wird mit Natronlauge neutralisiert, mit einem Dispergiermittel, hergestellt durch Kondensation von Naphtalinsulfonsäuren und Formaldehyd, auf etwa 40% Farbhstoff bezogen auf den Trockenanteil, eingestellt und in einem Einstoffdüsentrockner bei 180°C Eintritts- und 80°C Austrittstemperatur getrocknet.

Gegenüber der herkömmlichen Isolierung durch Aussalzen mit KCl oder KCl/NaCl geht kein Farbstoffverloren und die verdünnte Säure kann wiederaufbereitet werden.

### Beispiel 3

20 kg Lösung eines optischen Aufhellers nachstehender Formel 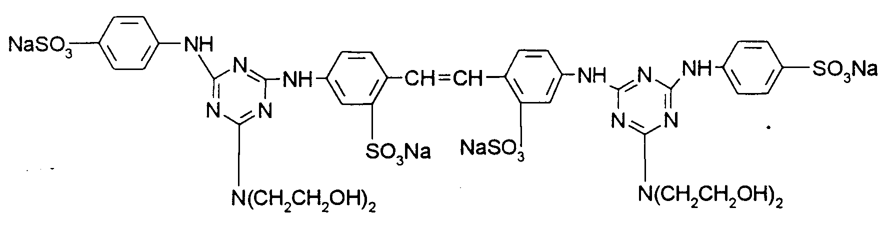 mit einem pH-Wert von ca. 7 werden über eine als Tubularmodul ausgebildete Membran gemäß Beispiel A mit 0,9 m² Austauschfläche bei 1 000 l/h überströmt, der Druck beträgt 20 bar. Während der Aufkonzentrierung um 1/3 des Volumens beträgt der Rückhalt 99,9%. Danach wird das Permeat durch vollentsalztes Wasser ersetzt bis etwa 1/3 des Volumens ausgetauscht sind, danach wird weiter Permeat abgezogen, bis der Wirkstoffgehalt etwa 30% beträgt, die Lösung wird mit Wasser auf 26% Wirkstoffgehalt verdünnt. Man erhält eine stabile Lösung sowohl in der Kälte (-20°C) sowie bis 40°C.

## Patentansprüche

1. Semipermeable Membranen, bestehend aus einer mikroporösen Trägerschicht aus Polyphenylensulfid und einer asymmetrischen Membranschicht aus cyclischen Polyharnstoffen mit wiederkehrenden Struktureinheiten der Formel 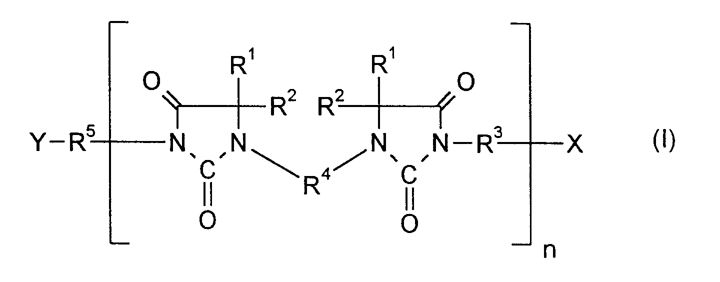 worin
R¹ und R² unabhängig voneinander Wasserstoff, C₁-C₆-Alkyl, oder zusammen mit dem C-Atom in 5-Stellung einen Cycloalkylrest mit 5 bis 10 C-Atomen bedeuten,
R³ und R⁴ unabhängig voneinander C₁-C₁₂-Alkylen, C₃-C₆-Cycloalkylen oder Arylen bedeuten, wobei diese Reste noch einmal mit sich selbst oder mit einem anderen aufgeführten Rest über Brückenglieder verbunden sein und Ether, Ester und Säureamidgruppen enthalten können,
R⁵ eine Bindung oder einen Rest R³ bzw. R⁴ darstellt,
X und Y eine Bindung oder unabhängig voneinander die Gruppen 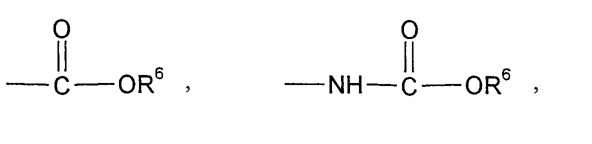 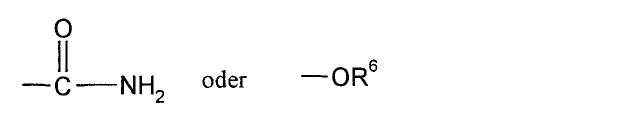 bedeuten,
wobei
R⁶ für Aryl, C₁-C₁₂-Alkyl, C₁-C₁₂-Hydroxyalkyl oder C₁-C₁₂-Alkoxyalkyl steht und
n für 2 bis 200 steht.

2. Verfahren zur Herstellung der Membran gemäß Anspruch 1, dadurch gekennzeichnet, daß eine Lösung eines cyclischen Polyharnstoffes mit wiederkehrenden Struktureinheiten der Formel (I) gemäß Anspruch 1 auf ein Polyphenylensulfidvlies in einer Schichtdicke von 100 bis 500 µm aufgegossen wird.

3. Verfahren zur Reinigung und/oder Aufkonzentrierung von Lösungen oder Suspensionen organischer Syntheseprodukte, die einen pH-Wert von <3 aufweisen, das dadurch gekennzeichnet ist, daß die Reinigung und/oder Aufkonzentrierung mit Hilfe einer semipermeablen Membran gemäß Anspruch 1 durchgeführt wird, wobei die Membran als Ultrafiltrations- oder Nanofiltrationsmembran betrieben wird.

4. Verfahren gemäß Anspruch 3, dadurch gekennzeichnet, daß die Lösung oder Suspension 2 bis 30 % Schwefelsäure enthält und einen pH-Wert von 0 bis 2 aufweist.

5. Verfahren gemäß Anspruch 3, dadurch gekennzeichnet, daß die Lösung oder Suspension eine Temperatur von 20 bis 40°C aufweist.

6. Verfahren gemäß Anspruch 1, dadurch gekennzeichnet, daß es sich bei den organischen Syntheseprodukten um Farbstoffe oder optische Aufheller handelt.

7. Verfahren gemäß Anspruch 1, dadurch gekennzeichnet, daß es sich bei den organischen Syntheseprodukten um Reaktivfarbstoffe handelt.

8. Verwendung der Membranen gemäß Anspruch 1 zur Reinigung und/oder Aufkonzentrierung von Lösungen oder Suspensionen organischer Syntheseprodukte.

## Claims

1. Semipermeable membranes consisting of a microporous support layer of polyphenylene sulphide and an asymmetrical membrane layer of cyclic polyureas with structural repeat units of the formula 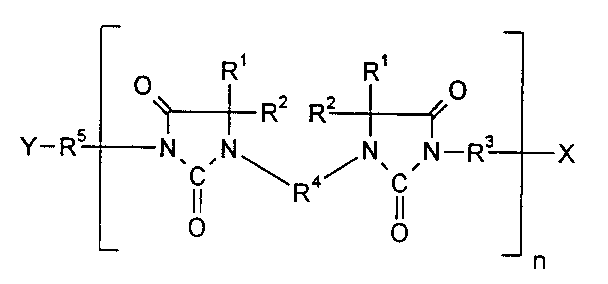 where
R¹ and R² are each independently of the other hydrogen, C₁-C₆-alkyl, or together with the carbon atom in position 5 a cycloalkyl radical having 5 to 10 carbon atoms,
R³ and R⁴ are each independently of the other C₁-C₁₂-alkylene, C₃-C₆-cycloalkylene or arylene, which radicals may be bonded once more to themselves or to another recited radical, via bridge members, and may contain ether, ester and amide groups,
R⁵ is a bond or a radical R³ or R⁴,
X and Y are each a bond or independently of each other the group 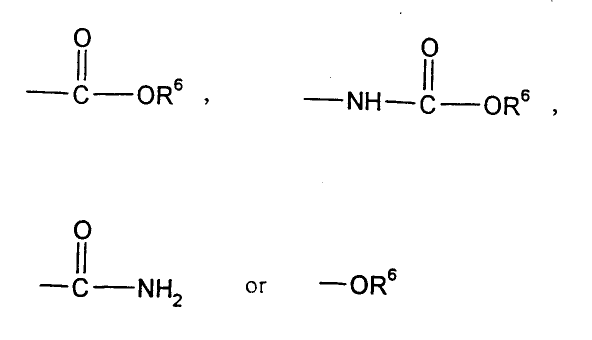 where
R⁶ is aryl, C₁-C₁₂-alkyl, C₁-C₁₂-hydroxyalkyl or C₁-C₁₂-alkoxyalkyl, and
n is from 2 to 200.

2. Process for producing the membrane of Claim 1, characterized in that a solution of a cyclic polyurea with structural repeat units of the formula (I) as set forth in Claim 1 is cast onto a polyphenylene sulphide nonwoven in a layer thickness from 100 to 500 µm.

3. Process for purifying and/or concentrating solutions or suspensions of organic synthesis products having a pH of <3, characterized in that the purifying and/or concentrating is carried out with the aid of a semipermeable membrane as claimed in Claim 1, said membrane being operated as an ultrafiltration or nanofiltration membrane.

4. Process according to Claim 3, characterized in that the solution or suspension contains 2 to 30% of sulphuric acid and has a pH from 0 to 2.

5. Process according to Claim 3, characterized in that the solution or suspension has a temperature from 20 to 40°C.

6. Process according to Claim 1, characterized in that the organic synthesis products are dyes or optical brighteners.

7. Process according to Claim 1, characterized in that the organic synthesis products are reactive dyes.

8. Use of the membranes of Claim 1 for purifying and/or concentrating the solutions or suspensions of organic synthesis products.

## Revendications

1. Membranes semi-perméables, se composant d'une couche support microporeuse en sulfure de polyphénylène et d'une couche de membrane asymétrique en polyurées cycliques à motifs récurrents de formule 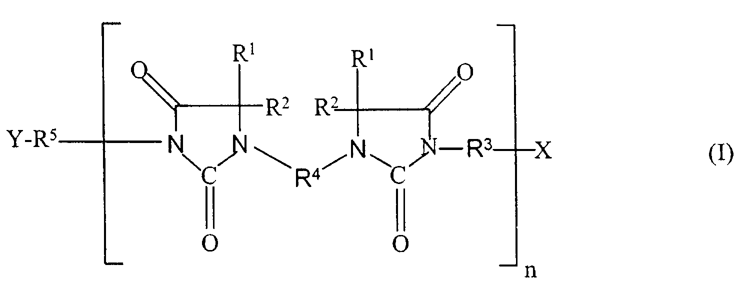 où
R¹ et R² représentent indépendamment l'un de l'autre un hydrogène, un alkyle en C₁-C₆ ou en commun avec l'atome de C à la position 5 un radical cycloalkyle ayant de 5 à 10 atomes de C,
R³ et R⁴ représentent indépendamment l'un de l'autre des alkyles en C₁-C₁₂, des cycloalkyles en C₃-C₆ ou des aryles, étant entendu que ces radicaux peuvent être liés encore une fois avec eux-mêmes ou avec un autre radical donné par des ponts et peuvent contenir des éthers, des esters et des groupes amide d'acide,
R⁵ représente une liaison ou un radical R³ ou R⁴,
X et Y représentent une liaison ou, indépendamment l'un de l'autre, les groupes 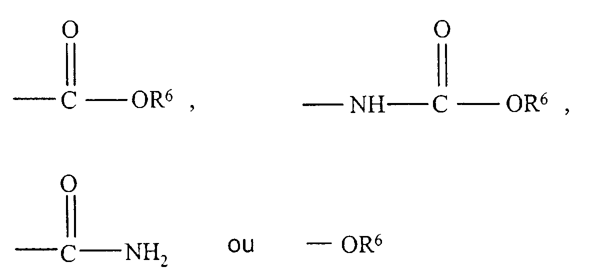 étant entendu que
R⁶ représente un aryle, un alkyle en C₁-C₁₂ ou un hydroxyalkyle en C₁-C₁₂ ou un alcoxyalkyle en C₁-C₁₂ et
n est compris entre 2 et 200.

2. Procédé de fabrication de la membrane selon la revendication 1, caractérisé en ce qu'on coule une solution d'une polyurée cyclique à motifs récurrents de formule (I) selon la revendication 1 sur un non-tissé de sulfure de polyphénylène à une épaisseur de 100 à 500 µm.

3. Procédé de purification et/ou de concentration de solutions ou suspensions de produits de synthèse organique de pH<3, caractérisé en ce que la purification et/ou la concentration s'effectue au moyen d'une membrane semiperméable selon la revendication 1, la membrane étant utilisée sous forme de membrane d'ultrafiltration ou de membrane de nanofiltration.

4. Procédé selon la revendication 3, caractérisé en ce que la solution ou suspension contient 2 à 30 % d'acide sulfurique et a un pH de 0 à 2.

5. Procédé selon la revendication 3, caractérisé en ce que la solution ou suspension a une température de 20 à 40°C.

6. Procédé selon la revendication 1, caractérisé en ce que les produits de synthèse organique sont des colorants ou des azurants optiques.

7. Procédé selon la revendication 1, caractérisé en ce que les produits de synthèse organique sont des colorants réactifs.

8. Utilisation des membranes selon la revendication 1 pour la purification et/ou la concentration de solutions ou suspensions de produits de synthèse organique.
